# EUROPEAN PATENT APPLICATION

(11) **EP 4 765 517 A1**
(43) Date of publication of application: **24.06.2026**
(21) Application number: 25224283.9
(22) Date of filing: 17.12.2025
(51) Int. Cl.: H01R 13/6595, H01R 13/506, B60R 16/023, H05K 9/00, B60L 3/04, H01R 12/70, H01R 12/72

(54) **CONNECTOR AND ELECTRIC VEHICLE COMPRISING THE SAME**

(30) Priority: 20.12.2024 CN 202423168669 U
(71) Applicant: Tyco Electronics (Shanghai) Co., Ltd., Pilot Free Trade Zone Shanghai 200131 (CN); Tyco Electronics Technology (SIP) Ltd., Suzhou 215026 (CN)
(72) Inventor: Ding, Pengsheng, Suzhou, 32 215123 (CN); Chen, Rancher, Shanghai, 200233 (CN); Jiang, Kaixuan, Shanghai, 200233 (CN)
(74) Representative: Grünecker Patent- und Rechtsanwälte PartG mbB

(57) **Abstract**

This application discloses a connector and an electric vehicle comprising the same. The connector comprises: a first housing provided with a receiving channel extending in a first direction; a first holder fixed in the receiving channel; a terminal at least partially fixed in the first holder; a first shielding component surrounding the first holder along a circumferential direction in the receiving channel and partially extending out of the first housing; and a second shielding component comprising an installation portion installed on a portion of the first shielding component that is located outside the first housing, and a grounding terminal extending from the installation portion for grounding. The second shielding component is installed on the portion of the first shielding component that is located outside the first housing by means of its installation portion, which not only simplifies the assembly and disassembly of various components of the connector, but also make it difficult for the first shielding component and the second shielding component to be deformed and exceed tolerances during the assembly and disassembly of the connector, thereby optimizing an electromagnetic stability of the connector.

## Description

### CROSS-REFERENCE TO RELATED APPLICATION

This application claims the priority of Chinese Application No. 202423168669.X filed on December 20, 2024 and entitled "Connector and Electric Vehicle comprising the same", the whole disclosure of which are incorporated herein by reference.

### Field of the Disclosure

The present application relates to a connector and an electric vehicle comprising the same.

### Description of the Related Art

A connector is a device for connecting two active devices to transmit current or signals. The connector may simplify the assembly process of electronic products and further simplify the mass production process of electronic products. The connector is easy to repair; if an electronic element fails, the failed element may be quickly replaced in the case that the connector is installed. With the advancement of technology, the electronic element of the electronic product installed with the connector may be updated, and an old electronic element is replaced with a new and better-performance electronic element, which is convenient to upgrade. The connector may improve flexibility of product design when designing and integrating new products and when using electronic elements to form a system. Therefore, the connector is widely used in transportation, medical treatment, aerospace, military, household appliances and other fields.

The basic properties of connectors may be classified into three broad categories: mechanical properties, electrical properties and environmental properties.

An insertion and extraction force and a mechanical life are important mechanical properties. The insertion and extraction force and the mechanical life of the connector are related to a structure of a contact component (a magnitude of a normal pressure), a coating quality (a coefficient of sliding friction) at a contact portion, and a dimensional accuracy (an alignment accuracy) of arrangement of the contact components.

Main electrical properties of the connector comprise a contact resistance, an insulation resistance, and a dielectric strength. The high-quality electrical connector should have a low and stable contact resistance, and the contact resistance of the connector varies from a few milliohms to tens of milliohms. The insulation resistance is an index for measuring the insulation performance between the contact components as well as between the contact components and the housing of the electrical connector, and an order of magnitude of the insulation resistance varies from hundreds of megaohms to thousands of megaohms. The dielectric strength represents an ability to withstand a rated test voltage between the contact components or between the contact components and the housing of the connector.

Environmental properties comprise a temperature resistance property, a moisture resistance property, a salt spray resistance property, a vibration resistance property and an impact resistance property, etc.

The technology development of connectors presents the following characteristics: high speed and digitization of signal transmission, integration of transmission of various types of signal, miniaturization of product volume, low cost of product, module combination, convenience of insertion and extraction, etc.

In the prior art, a high-voltage board-to-end connector is formed by multiple insert injection molding, it is difficult to design a mold, a metal piece is easy to deform, a size of a finished product is easy to exceed a tolerance, stability of the product is poor, a scrap rate of the finished product is high, it is difficult to assemble the connector and it is complex to manufacture the connector after a shielding and interlocking structure is added.

Therefore, there is an urgent need to provide a connector that is easy to assemble and disassemble with being compatible with shielding and interlocking and reduces complexity and cost of manufacturing.

### SUMMARY

The present application aims to solve at least one aspect of the above problems.

According to one aspect of the present application, there is provided a connector, comprising: a first housing provided with a receiving channel extending in a first direction; a first holder fixed in the receiving channel; a terminal at least partially fixed in the first holder; a first shielding component surrounding the first holder along a circumferential direction in the receiving channel and partially extending out of the first housing; and a second shielding component comprising an installation portion installed on a portion of the first shielding component that is located outside the first housing, and a grounding terminal extending from the installation portion for grounding.

According to one aspect of the present application, the first shielding component comprises a first top wall, a first bottom wall, and two first side walls connected between the first top wall and the first bottom wall and opposite to each other, each of the two first side walls being provided with a first through hole; and the installation portion comprises a second top wall and two second side walls extending from the second top wall and opposite to each other, wherein the second top wall is provided with a first fixing arm extending downward from the second top wall toward the first top wall to abut against the first top wall, and the second side wall is provided with a second fixing arm extending from the second side wall into the first through hole to be snap-connected with the first through hole.

According to one aspect of the present application, the connector further comprises: a second housing removably installed to the first housing and covering the second top wall and the two second side walls of the second shielding component, the second housing being provided with second grounding components on two opposite sides thereof respectively along a second direction orthogonal to the first direction, wherein the grounding terminal is configured to extend from the second side wall close to an outer side of the connector onto the second grounding component.

According to one aspect of the present application, the first housing is provided with an elastic arm extending from a top wall of the receiving channel toward the second housing, the elastic arm is provided with a protrusion thereon, the second top wall is provided with a second through hole therein, and the second housing is provided on a top wall thereof with a third through hole aligned with the second through hole, so that the protrusion is fixed into both of the second through hole and the third through hole.

According to one aspect of the present application, the second top wall is provided with four said first fixing arms uniformly arranged around the second through hole.

According to one aspect of the present application, the first holder is provided with two first holding channels therein, the second housing is provided with a second holder, and the second holder is provided with two second holding channels therein, so that the two second holding channels are respectively aligned with the two first holding channels when the second holder is inserted into the first shielding component, and the terminal comprises two first terminals, each of which is configured in a L-shape and extend from one of the two second holding channels into corresponding one of the two first holding channels.

According to one aspect of the present application, the first holder is further provided with two third holding channels therein, the terminal further comprises two second terminals, which are partially held in the two third holding channels, respectively.

According to one aspect of the present application, the connector further comprises two wires, wherein the second housing is further provided with an aperture on the top wall thereof, and the two wires are respectively connected to the two second terminals through the aperture, so that when the connector is plugged in place, each of the two second terminals generates a turn-on signal so that each of the two first terminals receives a current from a power source which is activated based on the turn-on signal.

According to one aspect of the present application, the first housing comprises two said receiving channels and a connection portion for connecting the two receiving channels, and the first housing is provided with a first grounding component located in the connection portion, wherein the second shielding component comprises two said installation portions and a connection arm connected between the two installation portions and electrically connected with the first grounding component.

According to one aspect of the present application, each of the first grounding component and the second grounding component is configured to be a cylindrical shape.

According to another aspect of the present application, there is provided an electric vehicle comprising the connector according to any of the above aspects.

### BRIEF DESCRIPTION OF THE DRAWINGS

The accompanying drawings, which are incorporated herein and form a part of the specification, illustrate the present application and further serve to explain the principles of the present application together with the description and to enable those skilled in the related art to make and use the embodiments described herein.
FIG. 1 is a perspective view of a connector according to an embodiment of the present application;
FIG. 2 is a perspective view showing only a combination of a first housing, a first shielding component and a second shielding component of the connector shown in FIG. 1, wherein the first shielding component located in the housing is not shown;
FIG. 3 is an exploded view of the combination shown in FIG. 2 showing the first housing, the first shielding component and the second shielding component of the connector;
FIG. 4 is a perspective view of the combination shown in FIG. 2 with the first housing removed, showing only the first shielding component and the second shielding component;
FIG. 5 is a perspective view of the connector with the first housing shown in FIG. 1 removed;
FIG. 6 is a rear view showing a first holder installed within a receiving channel in the first housing, showing a first holding channel and a third holding channel;
FIG. 7 is a side view showing the first holder assembled with a wire, a first terminal, and a second terminal;
FIG. 8 is a perspective view of the first holder shown in FIG. 7;
FIG. 9 is a perspective view showing a second housing assembled with the wire, the first terminal and the second terminal; and
FIG. 10 is a perspective view showing a combination of the second shielding component, a first grounding component and the second housing.

Features of the present application will become more apparent from the detailed description set forth below when taken in conjunction with the drawings, wherein similar reference numbers always indicate corresponding elements. In the drawings, similar reference numbers generally indicate identical, functionally similar, and/or structurally similar elements. Unless otherwise stated, the figures provided throughout the present application should not be interpreted as drawings drawn to scale.

### DETAILED DESCRIPTION OF EXEMPLARY EMBODIMENTS

In order to make the objectives, technical solutions, and advantages of the present application clearer, the following further describes the present application in detail with reference to specific embodiments and the accompanying drawings.

However, it should be understood that these descriptions are only exemplary and are not intended to limit the scope of the present application. In the following detailed description, for purposes of explanation, numerous specific details are set forth in order to provide a thorough understanding of the embodiments of the present application. However, it may be evident that one or more embodiments may be practiced without these specific details. In addition, in the following description, descriptions of well-known structures and techniques are omitted to avoid unnecessarily obscuring the concepts of the present application.

The terminology used herein is only for the purpose of describing specific embodiments, and is not intended to be limiting of the present application. The terms "comprise", "include" and the like used herein indicate the existence of the features, steps, operations and/or components, but do not exclude the existence or addition of one or more other features, steps, operations or components.

When an expression such as "at least one of A, B, and C, etc." is used, it should generally be interpreted according to the meaning of the expression commonly understood by those skilled in the art (for example, "a system having at least one of A, B, and C" should be interpreted as comprising but not being limited to a system having A alone; a system having B alone; a system having C alone; a system having A and B; a system having A and C; a system having B and C; and/or a system having A, B, and C).

All terms (comprising technical and scientific terms) used herein have meanings commonly understood by those skilled in the art, unless otherwise defined. It should be noted that the terms used herein should be interpreted as having meanings consistent with the context of this specification, and should not be interpreted in an idealized or overly rigid manner.

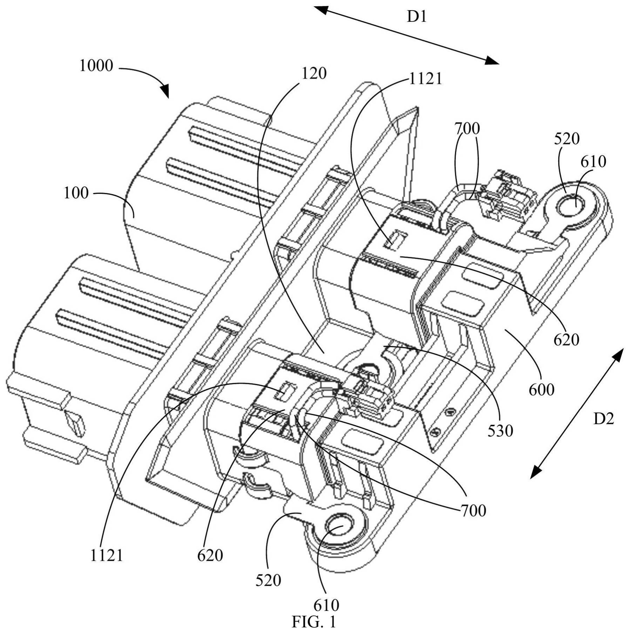

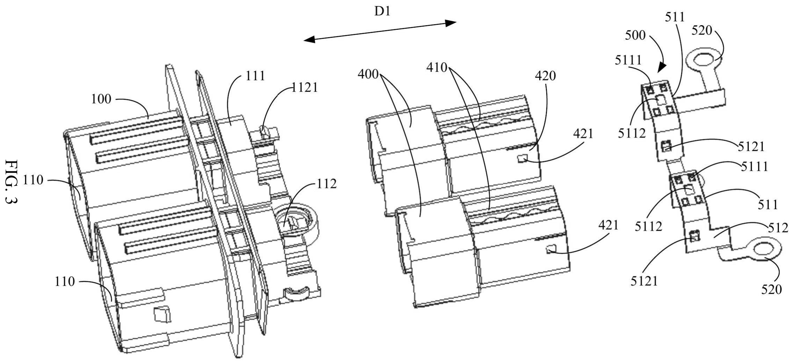

Referring to FIGS. 1 to 10, the present application discloses a connector 1000 and an electric vehicle (not shown) comprising the connector 1000.

The connector 1000 comprises a first housing 100, a first holder 200, a terminal 310, 320, a first shielding component 400, and a second shielding component 500. The first housing 100 is provided with a receiving channel 110 extending in a first direction D1. The first holder 200 is fixed in the receiving channel 110. The terminal 310, 320 is at least partially fixed in the first holder 200. The first shielding component 400 surrounds the first holder 200 along a circumferential direction in the receiving channel 110 and partially extends out of the first housing 100 to prevent the electromagnetic interference between the terminal 310, 320 and the external environment to the greatest extent. The second shielding component 500 comprises an installation portion 510 and a grounding terminal 520. The installation portion 510 is installed on a portion of the first shielding component 400 that is located outside the first housing 100. The grounding terminal 520 is configured to be a ring shape and extends from the installation portion 510 for grounding. However, those skilled in the art should understand that the present application is not limited thereto, and the grounding terminal 520 may be configured to be any suitable shape for grounding as required. The second shielding component 500 is installed on the portion of the first shielding component 400 that is located outside the first housing 100 by means of the installation portion 510 of the second shielding component 500, which not only simplifies the assembly and disassembly of various components of the connector 1000, but also enables the first housing 100, the first holder 200, and a second housing 600 described below to be produced by one injection molding process, so that a structure of a mold for producing any of the first housing 100, the first holder 200 and the second housing 600 is simplified, and a cost of producing the connector 1000 is reduced. Additionally, it is difficult for the first shielding component 400 and the second shielding component 500 to be deformed and exceed tolerances during the assembly and disassembly of the connector 1000, thereby optimizing an electromagnetic stability of the connector 1000.

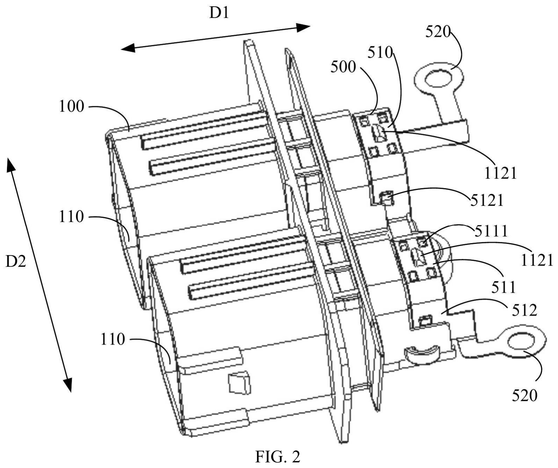

Referring to FIGS. 2-4, the first shielding component 400 comprises a first top wall 410, a first bottom wall (not shown), and two first side walls 420 connected between the first top wall 410 and the first bottom wall and opposite to each other, and each of the first side walls 420 is provided with a first through hole 421. The installation portion 510 comprises a second top wall 511 and two second side walls 512 extending from the second top wall 511 and opposite to each other. The second top wall 511 is provided with a first fixing arm 5111 extending downward from the second top wall 511 toward the first top wall 410 to abut against the first top wall 410, and the second side wall 512 is provided with a second fixing arm 5121 extending from the second side wall 512 into the first through hole 421 to be snap-connected with the first through hole 421, so as to fix the second shielding component 500 to the first shielding component 400. The arrangement of the first fixing arm 5111 and the second fixing arm 5121 simplifies the assembly between the second shielding component 500 and the first shielding component 400.

The second housing 600 is removably installed to the first housing 100 and covers the second top wall 511 and the two second side walls 512 of the second shielding component 500. The second housing 600 is provided with second grounding components 610 (not fully shown) on two opposite sides of the second housing 600 along a second direction D2 orthogonal to the first direction D1. The grounding terminal 520 is configured to extend from the second side wall 512 close to the outer side of the connector 1000 onto the second grounding component 610.

The first housing 100 is provided with an elastic arm 112 extending from a top wall 111 of the receiving channel 110 toward the second housing 600. The elastic arm 112 is provided with a protrusion 1121 thereon, the second top wall 511 is provided with a second through hole 5112 therein, and the second housing 600 is provided on a top wall 620 thereof with a third through hole 621 aligned with the second through hole 5112, so that the protrusion 1121 is fixed into both of the second through hole 5112 and the third through hole 621 so as to fix the second shielding component 500 and the second housing 600 to the first housing 100.

Referring to FIGS. 2-4, the second top wall 511 is provided with four said first fixing arms 5111 uniformly arranged around the second through hole 5112. However, those skilled in the art should understand that the present application is not limited thereto, and the distribution and number of the first fixing arms 5111 may be provided according to actual needs.

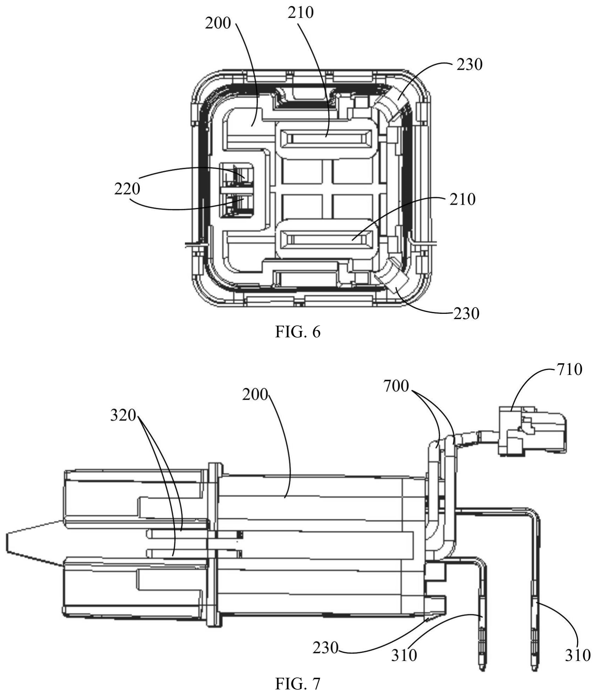

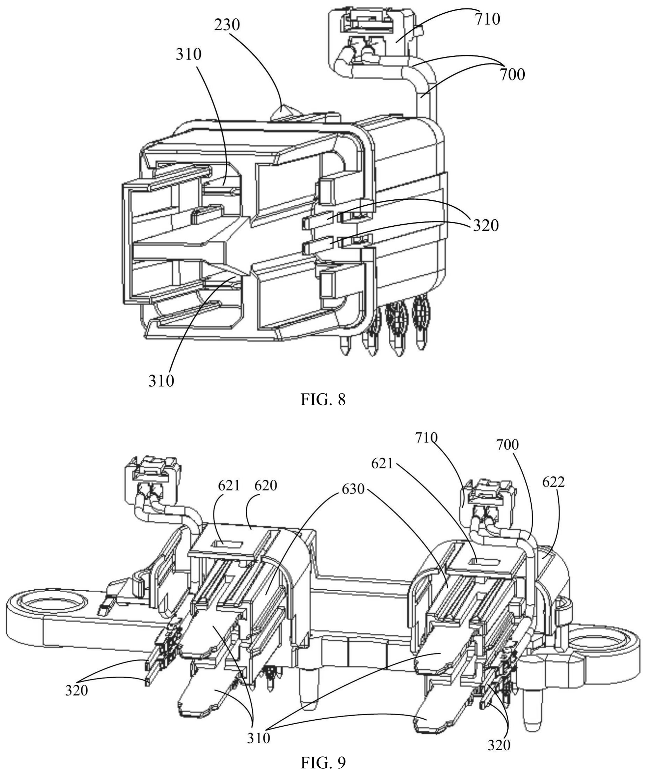

Referring to FIGS. 6-7, the first holder 200 is provided with two first holding channels 210 therein. Referring to FIGS. 9-10, the second housing 600 is provided with a second holder 630, and the second holder 630 is provided with two second holding channels 631 therein. In this way, when the second holder 630 is inserted into the first shielding component 400, the two second holding channels 631 are aligned with the two first holding channels 210, respectively. The terminal 310, 320 comprises two first terminals 310 (also referred as "high-voltage terminals"), each of which is configured to be a L-shape and extends from one of the two second holding channels 631 into corresponding one of the two first holding channels 210. In another embodiment of the present application, protruding ribs (not shown) for abutting against the two opposite side walls of the first holding channel 210 may be provided on two opposite sides of a portion of the first terminal 310 inserted into the first holding channel 210, respectively, so as to facilitate fixing the first terminal 310 in the first holding channel 210.

Referring to FIGS. 6-9, the first holder 200 is further provided with two third holding channels 220 therein. The terminal 310, 320 further comprises two second terminals 320(also referred as "low-voltage terminals"), which are partially held in the two third holding channels 220, respectively. In this way, a front end of the second terminal 320 protrudes out from the third holding channels 220 to be electrically connected with a corresponding terminal of a mating connector (not shown).

Referring to FIGS. 6-8, the first holder 200 is provided with protruding portions 230 on the top and the bottom of the rear end thereof respectively, to abut against an inner wall of the first shielding component 400 when the first holder 200 is fitted in the first shielding component 400, thereby facilitate fixing the first holder 200 in the first shielding component 400.

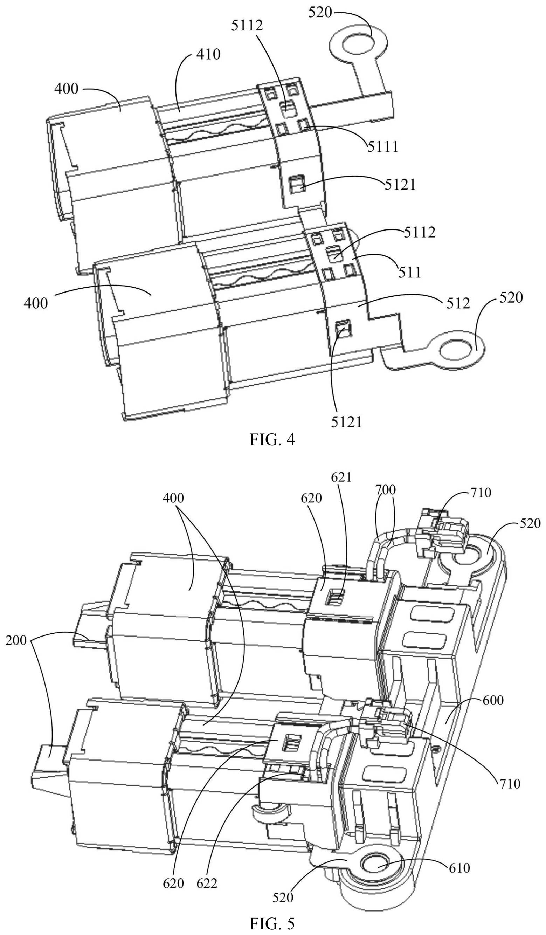

The connector 1000 further comprises two wires 700. One end of the wire 700 is provided with a connection member 710 connected to an associated interlocking circuit (not shown). The second housing 600 is further provided with an aperture 622 (see FIGS. 5, 9 and 10) extending in the first direction D1 on the top wall 620 thereof. The two wires 700 pass through the aperture 622, respectively, so that the other end of each of the wires 700 is connected to corresponding one of the two second terminals 320 by means of a metal elastic sheet. In this way, when the connector 1000 is plugged in place in the mating connector, an interlocking circuit is turned on, so that each of the two second terminals 320 may generate a turn-on signal, so that each of the two first terminals 310 may receive a high-voltage current from a power source (not shown) which is activated based on the turn-on signal.

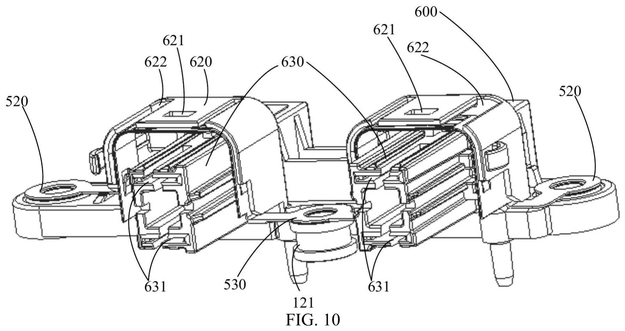

The first housing 100 comprises two said receiving channels 110 and a connection portion 120 for connecting the two receiving channels 110, and the first housing 100 is provided with a first grounding component 121 (see FIG. 10) located in the connection portion 120. The second shielding component 500 comprises two said installation portions 510 and a connection arm 530 connected between the two installation portions 510 and electrically connected with the first grounding component 121. Each of the first grounding component 121 and the second grounding component 610 is configured to be a cylindrical shape.

Although some embodiments according to the present application are described above, those skilled in the art should understand that the present application is not limited thereto. The first housing 100 may comprise more than two receiving channels 110. Accordingly, the second shielding component 500 may also comprise more than two installation portions 510. Each of the first grounding component 121 and the second grounding component 610 may also be configured as any suitable shape.

So far, the embodiments of the present application have been described in detail with reference to the drawings. It should be noted that the implementations not shown or described in the drawings or the text of the specification are all known to those of ordinary skill in the art and are not described in detail. In addition, the above definition of each of components is not limited to various specific structures, shapes or manners mentioned in the embodiments, and those of ordinary skill in the art may make simple changes or substitutions.

It should also be noted that, in the specific embodiments of the present application, the numerical parameters in this specification and the appended claims are approximate values and may be changed according to the desired characteristics obtained by the content of the present application, unless otherwise specified. In detail, all numbers expressing dimensions, ranges, and so forth used in the specification and the claims are to be understood as being modified in all instances by the term "about." In general, the expressed meaning of numbers is intended to encompass a variation of ± 10% from a specified amount in some embodiments, a variation of ± 5% from a specified amount in some embodiments, a variation of ± 1% from a specified amount in some embodiments, and a variation of ± 0.5% from a specified amount in some embodiments.

Those skilled in the art will appreciate that various combinations and/or assemblies of features recited in the various embodiments and/or claims of the present application may be made, even if such combinations and/or assemblies are not explicitly recited in the present application. In particular, various combinations and/or assemblies of features described in various embodiments and/or claims of the present application may be made without departing from the spirit and teachings of the present application. All such combinations and/or assemblies fall within the scope of the present application.

The specific embodiments described above provide further detailed explanations of the objects, technical solutions, and beneficial effects of the present application. It should be understood that the above description is only the specific embodiments of the present application and is not intended to limit the present application. Any modifications, equivalent substitutions, improvements, etc. made within the spirit and principles of the present application should fall within the protection scope of the present application.

## Claims

1. A connector (1000), **characterized by** comprising:
a first housing (100) provided with a receiving channel (110) extending in a first direction (D1);
a first holder (200) fixed in the receiving channel (110);
a terminal (310, 320) at least partially fixed in the first holder (200);
a first shielding component (400) surrounding the first holder (200) along a circumferential direction in the receiving channel (110) and partially extending out of the first housing (100); and
a second shielding component (500) comprising an installation portion (510) installed on a portion of the first shielding component (400) that is located outside the first housing (100), and a grounding terminal (520) extending from the installation portion (510) for grounding.

2. The connector (1000) according to claim 1, **characterized in that**,
the first shielding component (400) comprises a first top wall (410), a first bottom wall, and two first side walls (420) connected between the first top wall and the first bottom wall and opposite to each other, each of the two first side walls (420) being provided with a first through hole (421); and
the installation portion (510) comprises a second top wall (511) and two second side walls (512) extending from the second top wall and opposite to each other, wherein the second top wall (511) is provided with a first fixing arm (5111) extending downward from the second top wall (511) toward the first top wall (410) to abut against the first top wall, and the second side wall (512) is provided with a second fixing arm (5121) extending from the second side wall (512) into the first through hole (421) to be snap-connected with the first through hole.

3. The connector (1000) according to claim 2, **characterized by** further comprising:
a second housing (600) removably installed to the first housing (100) and covering the second top wall (511) and the two second side walls (512) of the second shielding component (500), the second housing (600) being provided with second grounding components (610) on two opposite sides thereof respectively along a second direction (D2) orthogonal to the first direction (D1), wherein the grounding terminal (520) is configured to extend from the second side wall (512) close to an outer side of the connector (1000) onto the second grounding component (610).

4. The connector (1000) according to claim 3, **characterized in that**,
the first housing (100) is provided with an elastic arm (112) extending from a top wall (111) of the receiving channel (110) toward the second housing (600), the elastic arm (112) is provided with a protrusion (1121) thereon, the second top wall (511) is provided with a second through hole (5112) therein, and the second housing (600) is provided on a top wall (620) thereof with a third through hole (621) aligned with the second through hole (5112), so that the protrusion (1121) is fixed into both of the second through hole (5112) and the third through hole (621).

5. The connector (1000) according to claim 4, **characterized in that** the second top wall (511) is provided with four said first fixing arms (5111) uniformly arranged around the second through hole (5112).

6. The connector (1000) according to claim 4 or 5, **characterized in that**,
the first holder (200) is provided with two first holding channels (210) therein,
the second housing (600) is provided with a second holder (630), and the second holder (630) is provided with two second holding channels (631) therein, so that the two second holding channels (631) are respectively aligned with the two first holding channels (210) when the second holder (630) is inserted into the first shielding component (400), and
the terminal (310, 320) comprises two first terminals (310), each of which is configured in a L-shape and extend from one of the two second holding channels (631) into corresponding one of the two first holding channels (210).

7. The connector (1000) according to claim 6, **characterized in that**,
the first holder (200) is further provided with two third holding channels (220) therein, the terminal (310, 320) further comprises two second terminals (320), which are partially held in the two third holding channels (220), respectively.

8. The connector (1000) according to claim 7, **characterized by** further comprising:
two wires (700),
wherein the second housing (600) is further provided with an aperture (622) on the top wall (620) thereof, and the two wires (700) are respectively connected to the two second terminals (320) through the aperture (622), so that when the connector (1000) is plugged in place, each of the two second terminals (320) generates a turn-on signal so that each of the two first terminals (310) receives a current from a power source which is activated based on the turn-on signal.

9. The connector (1000) according to claim 8, **characterized in that**,
the first housing (100) comprises two said receiving channels (110) and a connection portion (120) for connecting the two receiving channels, and the first housing (100) is provided with a first grounding component (121) located in the connection portion (120),
wherein the second shielding component (500) comprises two said installation portions (510) and a connection arm (530) connected between the two installation portions and electrically connected with the first grounding component (121).

10. The connector (1000) according to claim 9, **characterized in that**,
each of the first grounding component (121) and the second grounding component (610) is configured to be a cylindrical shape.

11. An electric vehicle, **characterized by** comprising the connector (1000) according to any of claims 1 to 10.
